# EUROPEAN PATENT SPECIFICATION

(11) **EP 2 249 663 B1**
(45) Date of publication and mention of the grant of the patent: **05.09.2012**
(21) Application number: 09829872.2
(22) Date of filing: 23.01.2009
(51) Int. Cl.: A23B 9/08, A23L 1/212, A23L 1/29, A23N 12/08, B02B 1/08, A23L 1/20, A23L 3/50

(54) **AN IMPROVED MANUFACTURING PROCESS FOR A FOOD PRODUCT**
VERBESSERTES VERFAHREN ZUR HERSTELLUNG EINES NAHRUNGSMITTELPRODUKTS
PROCÉDÉ DE FABRICATION AMÉLIORÉ POUR UN PRODUIT ALIMENTAIRE

(30) Priority: 05.12.2008 AU 2008906303
(43) Date of publication of application: 17.11.2010
(73) Proprietor: BLUE RIBBON ROASTING PTY LTD, Kenmore QLD 4069 (AU)
(72) Inventor: QUAIL, Ken, Lane Cove New South Wales 2066 (AU)
(74) Representative: Sutcliffe, Nicholas Robert
(86) International application number: PCT/AU2009/000076
(87) International publication number: WO 2010/063057

(56) References cited:
- EP-A1- 1 941 803
- EP-A2- 0 338 941
- WO-A1-2004/066743
- WO-A1-2008/009061
- WO-A2-2004/091314
- US-A- 3 639 129
- US-A- 4 109 394
- GONZALEZ ET AL: "Amaranth starch-rich fraction properties modified by extrusion and fluidized bed heating", LEBENSMITTEL WISSENSCHAFT UND TECHNOLOGIE, ACADEMIC PRESS, LONDON, GB, vol. 40, no. 1, 1 January 2007 (2007-01-01), pages 136-143, XP005582776, ISSN: 0023-6438, DOI: DOI:10.1016/J.LWT.2005.09.003
- SENADEERA ET AL: "Physical Properties and Fluidization Behaviour of Fresh Green Bean Particulates During Fluidized Bed Drying", FOOD AND BIOPRODUCTS PROCESSING, INSTITUTION OF CHEMICAL ENGINEERS, RUGBY, GB, vol. 78, no. 1, 1 March 2000 (2000-03-01), pages 43-47, XP022525322, ISSN: 0960-3085, DOI: DOI:10.1205/096030800532707
- HUI, Y. H.: 'Food Drying Science and Technology', 2007, DESTECH PUBLICATIONS INC, ISBN 1932078568 article 'Internet <URL: http:l/books.google.com/books?id=xZ SGH3B1 gwC&p=PA77&dq=fluidized +bed+food#PPA77,M1', pages 77 - 79

## Description

### FIELD OF THE INVENTION

THIS invention relates to food products. More particularly, this invention relates to processes for the production of an ingredient that is particularly useful in the production of a food product and more particularly, can be used for the production of low allergen or allergen-free food products.

### BACKGROUND TO THE INVENTION

Processes for the production of food products often need be adapted to a variety of different environment and settings. A food allergy and/or food intolerance can result from a variety of foodstuffs including fish and shellfish (such as shrimp, lobster and crab), peanuts, tree nuts, wheat (gluten), eggs, soy, sesame and dairy. Food allergies and food intolerances are becoming increasingly prevalent in the population. For example, it is estimated that 0.5% of the population have an allergy to peanuts. The medical sequelae of food allergies and food intolerances can range from a mild reaction such as nasal congestion to anaphylactic shock and potential death.

Due to the prevalence of food allergy and food intolerances, consumer demands in the marketplace have exposed a need to provide processed food products that are safe for consumption by food allergy sufferers. However plant food ingredients that have both low levels of allergenicity and high levels of taste and nutrition are not yet widely available. This lack of suitable products can be attributed to the difficulty in producing a low-allergen or allergen-free ingredient with acceptable organoleptic properties from efficient and low cost plant conversion processes.

International Publication No. WO2008/009061 in the name of the Grain Foods CRC describes processes for the production of a nut-free spreadable food product which includes the step of subjecting the non-nut plant material to an elevated temperature.

Gonzales et. al. disclose in Lebensmittel Wissenschaft und Technologie vol.40, no.1, 1 January 2007, a fluidised bed method for pre-cooking flour at a temperature of at least 150°C for 18 seconds to modify starch granular structure. In WO2004/091314, the use of spray drying techniques to produce soya fiber particles of 0.01 micons to 35 microns in size from a slurry of homogenised soya powder is disclosed. EP 1941803 discloses a method for making whole bean milk powder from milled soybean slurry, optionally including a spray drying step. US3639129 discloses methods of producing full fat soya flour, but describes spray drying as producing brown specks that make the product unusable. WO2004/066743 discloses a process for drying particles that uses a heated gas stream in a ring drying circuit. US4109394 discloses apparatus for fluidizing particles for treatment on a conveyor. EP0338941 discloses a method of conditioning soya material by contact with moisture at 77°C.

### SUMMARY OF THE INVENTION

There exists a market need to provide food products which are safe for consumption by people with a reaction to food allergens or food intolerances. At the same time these products should provide a tasty and nutritious alternative to be commercially successful.

The present invention is broadly directed to a process of drying a plant material for inclusion into food products, and in preferably, low allergen or allergen-free food products.

In other broad forms, the invention is directed to processes of producing a low allergenicity or allergen-free plant material and/or ingredient from a low allergenic or allergen-free plant material. More particularly, the invention is also directed to processes under controlled conditions which thereby produces consistent results. This non-nut plant material and/or ingredients can then be used to produce a range of allergen-free or low allergenicity food products.

In a first aspect, the invention provides a process of drying a particulate plant material for use in a food product, as set out in claim 1. said process including the step of subjecting a particulate plant material suspended in a fluid stream to an elevated temperature to thereby dry said particulate plant material.

In a second aspect, the invention provides a process of drying a non-nut leguminous particulate plant material, said process including the step of subjecting the non-nut leguminous plant material suspended in a fluid stream to an elevated temperature to thereby dry said non-nut leguminous plant material, as set out in claim 12.

Preferably, the non-nut leguminous plant material is a mungbean.

Adried particulate plant material may be produced according to the process of the first aspect for use in a food product.

A dried leguminous particulate plant material may be produced according to the process of the second aspect.

The particulate plant material or the non-nut leguminous particulate plant material may have a mean particle size of less than about 1000µm.

More preferably, the mean particle size is between about 30µm and about 800µm.

Even more preferably, the mean particle size is between about 80µm and about 600µm.

The mean particle size is between about 150µm and about 490µm.

In other preferred embodiments, the mean particle size is between about 240µm and about 450µm.

In preferred embodiments, the particulate plant material or the non-nut leguminous particulate plant material is suspended in a finidised bed and more preferably, a fluidising stream.

Preferably, the fluid stream is a liquid or a gas.

More preferably, the fluid stream is a gas.

Even more preferably, the gas is air.

Preferably, the elevated temperature is between about 100°C and about 400°C.

More preferably, the elevated temperature is between about 140°C and about 370°C.

Even more preferably, the elevated temperature is between about 190°C and about 350°C.

Yet even more preferably, the elevated temperature is between about 250°C and about 300°C.

In further preferred embodiments, the elevated temperature is about 270°C.

In preferred embodiments of the aforementioned aspects, the particulate plant material is a non-nut plant material.

Preferably, the particulate plant material is selected from the group consisting of a plant seed, a cereal grain and a legume.

Preferably, the plant seed is selected from the group consisting of a sunflower seed, an amaranth seed, a quinoa seed, a tef seed, a chiatah seed, a buckwheat seed and a pumpkin seed.

In preferred embodiments, the cereal grain is selected from the group consisting of wheat, barley, rice, maize, sorghum, rye, millet and oats.

In other preferred embodiments where the non-nut plant material is a legume, the legume is not a peanut or any other nut.

In certain preferred embodiments the legume is selected from the group consisting of a bean, a mesquite, a broad bean, a pea, a lupin and a lentil.

Preferably, the bean is selected from the group consisting of a soybean, an adzuki bean, an anasazi, a lima bean, a cow pea, a rice bean, a urad bean, a moth bean, a tepary bean, a runner bean, a hyacinth bean, a black bean, a fava bean, a faba bean, a kidney bean and a mungbean.

Preferably, the bean is a mungbean.

In preferred embodiments, the dried particulate plant material or the dried non-nut leguminous plant material imparts a roasted flavour or a nut-like flavour to a food product.

In preferred embodiments, the food product is selected from the group consisting of a grain-based food product, a dairy based food product, a cereal, a baked product, a health bar, a nutrition bar, a snack bar, a cereal, a liquid food product, a semi-liquid food product, a sauce, a flour and a spreadable food product.

In preferred embodiments, the food product is a spreadable food product and preferably a nut-flavoured spreadable food product. Preferably, the dried particulate plant material or dried non-nut leguminous plant material imparts a nut-flavour to said nut-flavoured spreadable food product.

Throughout this specification, unless the context requires otherwise, the words "comprise", "comprises" and "comprising" will be understood to imply the inclusion of a stated integer or group of integers but not the exclusion of any other integer or group of integers.

### BRIEF DESCRIPTION OF THE FIGURES

In order that the invention may be readily understood and put into practical effect, preferred embodiments will now be described by way of example with reference to the accompanying figures wherein like reference numerals refer to like parts and wherein:

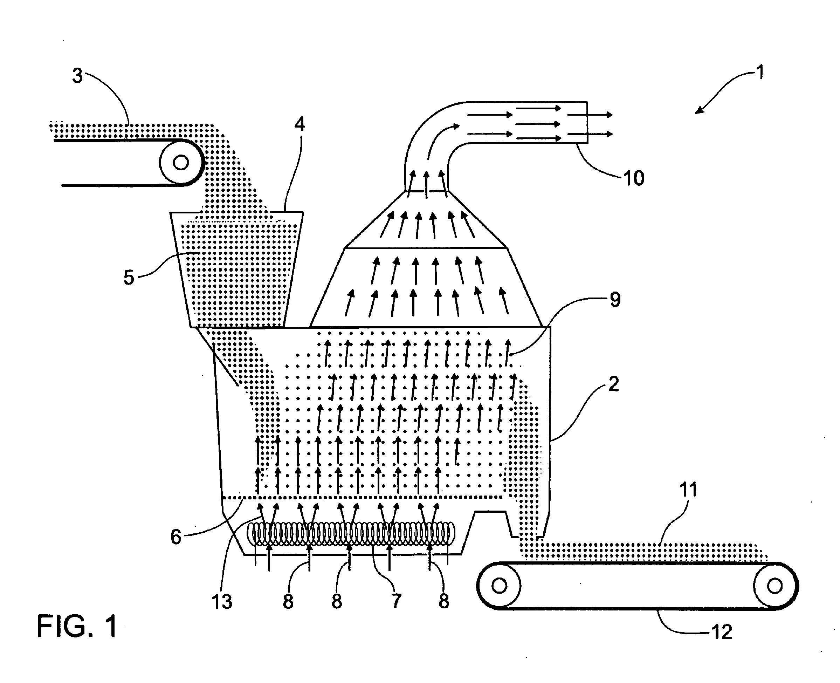

FIG. 1 is a schematic representation of a system and apparatus for drying non-nut plant material according to a preferred embodiment of the present invention.

### DETAILED DESCRIPTION OF THE INVENTION

The present invention arises, at least in part, from the observation that rapid and uniform distribution of heat to a particulate plant material results in consistent heat treatment of the particulate plant material. The result may be the production or imparting of a nut-like flavour to a nut-free plant material or alternatively, conversion of a starting plant material with an undesirable raw flavour (such as a bean-like flavour) to a neutral, bland, nut-like or roasted flavour in order to produce a dried plant material for inclusion into a suitable food product. It is envisaged that the dried particulate plant material may be included in a low-allergen or allergen-free food product.

Therefore, the process of the present invention overcomes some disadvantages and limitations of other approaches for the production of food ingredients using elevated temperature, inclusive of those processes described in International Publication No. WO2008/009061 (as hereinbefore described). More particularly, treatment of a particulate plant material with an elevated temperature under the conditions described herein for the present invention results in a rapid and relatively low cost route to converting a raw material with an undesirable flavour to a treated material with a desired flavour whilst simultaneously drying the particulate plant material to an acceptable level. Such a process may enable higher levels of addition of the dried particulate plant material to a food product without adversely affecting flavour.

In particular forms, a further advantage of the present invention is a process which imparts a nut-like flavour to a non-nut particulate plant material by subjecting a non-nut particulate plant material to an elevated temperature in a rapid and uniform manner, whereby the process minimises or eliminates burning the surface of a non-nut particulate plant material resulting in the generation of undesirable flavours. The result is a non-nut particulate plant material with an attractive nutty or roasted flavour that is untainted by undesirable burnt flavours. However it will be appreciated that the processes of the invention may also impart other flavour characteristics such as a roasted flavour, neutral flavour or bland flavour.

It will be understood that the dried particulate plant material produced according to the processes described herein are suitable for use in a variety of food products which preferably meet consumer standards such as palatability and taste acceptability.

Disclosed herein are processes of drying particulate plant material for use in a food product which includes the step of subjecting a particulate plant material suspended in a fluid stream to an elevated temperature, to thereby dry said particulate plant material.

Also disclosed herein are processes of drying a non-nut leguminous particulate plant material which includes the step of subjecting a non-nut leguminous particulate plant material suspended in a fluid stream to an elevated temperature to thereby dry said non-nut leguminous particulate plant material.

In preferred embodiments, the dried particulate plant material or dried non-nut leguminous particulate plant material imparts a roasted flavour or nut-flavour to a food product and more preferably, a nut-flavoured spreadable food product.

By "*subject*", "*subjecting*" or "*subjected*" is meant to treat or expose the particulate plant material or flour and/or semolina derived from a particulate plant material according to the processes of the present invention.

In light of the foregoing, the disclosure is also broadly directed to processes for producing a dried particulate plant material with the particular feature of being suitable for consumption by people with food allergies and/or food intolerances. Non-limiting examples of foods which may elicit an allergic reaction or a food intolerance-associated reaction include nuts such as peanuts and tree nuts (such as almonds, cashews, hazels walnuts and pecans), wheat and in particular gluten, dairy (e.g. milk), eggs, fish and shellfish.

Therefore in particular embodiments, the invention contemplates processes of drying or producing food ingredients or materials has either low-allergenicity, is allergen-free or is substantially-free of an allergen that may be a substitute for food ingredients that are potentially harmful. In alternative embodiments, the dried particulate plant material may impart a nutty flavour to a nut-flavoured nut-free food product. In light of the foregoing it will be appreciated that the dried particulate plant materials produced according to the processes of the invention may be used as a substitute for a variety of potentially allergenic or food intolerance ingredients such as soybean, eggs, wheat (gluten) and dairy (lactose), although without limitation thereto.

In preferred embodiments, the particulate plant material is non-nut.

In other preferred embodiments, the particulate plant material is a non-nut leguminous plant material.

The term *"nut"* as used herein may refer to an indehiscent (it does not split open along a definite seam at maturity) dry fruit with one seed and a thick, hard pericarp (the shell). The term "nut" is also used to refer to various hard-shelled fruits or seeds. A *"nut"* may also be the fruit of certain trees and shrubs that have the seed enclosed in a bony, woody, or leathery covering that does not open when ripe. For example, a hard, dry, one-celled and one-seeded fruit, such as the nuts of the hazel, beech, oak, and chestnut. The term *"nut"* may also refer to a nut in the true botanical sense or may refer to a nut as in known in the culinary or common-usage sense. By way of example, a brazil nut is commonly known in the culinary sense as a nut however can also have a botanical classification as a seed. The term "nut" may also refer to the seed-bearing, hard, inner layer (endocarp) of a fruit called a drupe. A *"nut"* may also refer to a nut-like gymnosperm seed such a pine nut. In preferred embodiments, the nut is selected from the group consisting of a peanut, a tree nut, a cashew, an almond, a walnut, a macadamia, a hazelnut, a brazil nut, a chestnut, a pine nut, a coconut and a pistachio.

As referred to hereinbefore, the dried particulate plant material may be suitable for use in a food product which is particularly suited for consumption by individuals which have a food allergy and/or food intolerance. Hence in particular embodiments use of a plant material in the processes of the present invention which either is allergen-free, substantially allergen-free or has low-allergenicity may be desirable.

By *"substantially-free of an allergen "or "substantially allergen-free"* in the context of the present invention is meant a level of an allergen or any other compound that is associated with or linked to a food intolerance or food sensitivity reaction, that will not cause an allergic reaction, food sensitivity reaction or a food intolerance reaction associated with said allergen or any other compound that is associated with or linked to a food intolerance or food sensitivity reaction, upon consumption of a food which is potentially allergenic and/or potentially may cause a food intolerance reaction. Non-limiting examples of foods which may cause an allergic or food intolerance reaction include fish, shellfish, nuts, tree nuts, soy, wheat (gluten), dairy and eggs. In preferred embodiments, the allergen is a nut allergen such as a peanut allergen or alternatively, a tree nut allergen derived from a tree nut such as almonds, cashews, hazels, walnuts, pecans and macadamias, although without limitation thereto. In other embodiments, the allergen may be a pan-allergen or a cross-reactive allergen. It will be appreciated that *"substantially-free* " may be a level of allergen or any other compound that is associated with or linked to a food intolerance reaction which may be considered free or devoid of a food allergen or have low allergenicity. It will be appreciated that typically a food allergy can be thought of as classical allergy that is associated with an immune-system mediated reaction which generally involves an IgE response. In particular circumstances, the IgE response may be a food-specific or allergen-specific IgE. It will also be appreciated typically a food intolerance may refer to a collection of symptoms (such as headaches, muscle and joint aches and pains, and tiredness) triggered by certain foods. Although not wishing to be bound by any particular theory, the immune system does not cause the symptoms of food intolerance, though these symptoms may look and feel like those of a food allergy. By way of example, Coeliac's disease is a gluten intolerance syndrome that is triggered by eating wheat, barley and rye-containing foods, whilst lactose (a sugar found in milk) can cause intolerance to milk in certain individuals who lack the ability to break it down. It will be appreciated that a food allergy and a food intolerance may cause same or similar symptoms but are distinct syndromes. For example lactose intolerance is not an allergy, but causes some of the same symptoms as milk allergy, like cramping pains in the stomach and diarrhea.

In general embodiments, the particulate plant material includes, but is not limited to, a plant seed, a cereal grain and a legume. The particulate plant material may be dehulled or alternatively, have the hull, husk or outer covering present.

A person of skill in the art will readily appreciate that a particularly suitable particulate plant material for a food product may be a cereal grain, and in preferred embodiments, the cereal grain is selected from wheat, barley, rice, maize, sorghum, rye, millet and oats.

In particular embodiments, the present invention is particularly suited to drying a leguminous particulate plant material that is not a nut and in particular, a legume that is not a peanut (i.e. non-nut or a non-peanut leguminous particulate plant material).

In preferred embodiments, the leguminous particulate plant material is selected from the group consisting of beans, mesquite, lupins, broad beans, peas, and lentils.

In certain preferred embodiments, a lentil can be selected from the group consisting of brown lentils, green lentils, puy lentils, black lentils, decorticated lentils and yellow lentils.

In particularly preferred embodiments, the bean is selected from the group consisting of a soybean, an adzuki bean, an anasazi, a lima bean, a cow pea, a rice bean, a urad bean, a moth bean, a tepary bean, a runner bean, a hyacinth bean, a black bean, a fava bean, a faba bean, a kidney bean and a mungbean.

Preferably, the leguminous particulate plant material is a mungbean. In particularly preferred embodiments, the non-nut leguminous plant material is a dehulled mungbean.

Non-limiting examples of suitable the mungbean varieties are Berken, Satin, Regur, Celera, Delta, Emerald, Green Diamond and White Gold.

In other preferred embodiments, the leguminous particulate plant material is a pea such as, but not limited to, a chickpea.

It will be appreciated that in certain embodiments, the particulate plant material is a plant seed and is preferably an edible plant seed. It will be understood that a *"seed"* can refer to a ripened plant ovule containing an embryo.

More preferably, the plant seed is selected from the group consisting of a sunflower seed, an amaranth seed, a quinoa seed, a tef seed, a chiatah seed, a buckwheat seed and a pumpkin seed.

In light of the foregoing, it will be appreciated that in certain preferred embodiments, the particulate plant material utilised in the processes of the present invention may correspond to a flour and/or semolina. It will be appreciated that the term "semolina" may refer to plant materila with a particle size that corresponds to the large hard grains of wheat left after flour has been bolted.

Preferably, the particulate plant material has a mean particle size of less than about 1000µm (i.e. about 1mm).

More preferably, the particulate plant material has a mean particle size of about 30µm, 50µm, 70µm, 90µm, 100µm, 120µm, 150µm, 170µm, 190µm, 200µm, 220µm, 240µm, 250µm, 260µm, 270µm, 280µm, 290µm, 300µm, 310µm, 320µm, 330µm, 340µm, 350µm, 360µm, 370µm, 380µm, 390µm, 400µm, 410µm, 420µm, 430µm, 440µm, 450µm, 460µm, 470µm, 480µm, 490µm, 500µm, 55µm, 600µm, 650µm, 700µm, 750µm, 800µm, 850µm, 900µm and about 950µm.

In the context of the present invention, by *"suspended in a fluid stream* " is meant that particulate plant matter or particulate plant material is distributed, mixed, dispersed, floated or otherwise maintained in a fluid stream or field so that the fluid-particulate mixture behaves or exhibits fluid-like properties. For example, this may be achieved by the introduction of pressurised fluid through the particulate medium at a rate or velocity sufficient to support the weight of the particles in a fluidised state. Moreover, the application of an elevated temperature to particulate matter which is suspended in a fluid stream results in the fluidisation of particles with a significant and rapid heat capacity and transfer whilst maintaining a homogenous or uniform temperature field. It will be appreciated that heat transfer under such conditions results in consistent and controlled heat treatment of the particles, thereby eliminating or minimising burnt particles and uneven heat treatment. In particularly preferred embodiments, the particulate plant material is suspended by a fluid stream.

In light of the foregoing, it will be appreciated that in preferred embodiments, the particulate plant material particles are in a fluidised state.

In other preferred embodiments, the particulate plant material is suspended in a continuous fluid stream.

It is contemplated that the fluid is a gas or a liquid. Preferably the fluid is a gas and more preferably, the gas is air.

As hereinbefore described, pressurised fluid may be used to generate a fluid-particulate mixture which exhibits fluid-like properties and in particular at a velocity sufficient to support the particulate matter. According to general embodiments, the velocity is preferably between about 2m/sec to about 7m/sec, more preferably about 3 m/sec, 4 m/sec, 5 m/sec or 6 m/sec.

In particular preferred embodiments, the processes of the invention may utilise a fluidised or fluid bed dryer apparatus to subject the flour, semolina or other particulate plant material suspended in a fluid stream, to an elevated temperature.

Reference is made to FIG 1, which is a non-limiting example of a fluidised bed dryer system 1 that is suitable for use in the processes of the present invention. The fluidised bed dryer system 1 comprises a holding vessel 2, a feed inlet 3 and a product outlet 12. Feed inlet 3 supplies untreated particulate plant material 5 by way of a hopper 4 into holding vessel 2 for subsequent treatment. Product outlet 12 carries the treated particulate plant material 11 from holding vessel 2 to other downstream processing steps or alternatively, to storage for use at a later time. It is envisaged that in preferred embodiments, feed inlet 3 and product outlet 12 operate by way of a conveyor mechanism. In alternative embodiments, the untreated particulate plant material 5 enters holding vessel 2 by way of a rotary valve.

Holding vessel 2 further comprises a heat source 7 and a fluid source 8. Heated fluid and in particular heated air 13, which is generated by passing air over the heat source 7, is supplied to the holding vessel 2 through a perforated distributor plate 6. The perforated distributor plate 6 diffuses the upward flowing hot air 13 which in turn, helps create a stable and uniform fluidised bed. The hot air 13 flows through a layer of untreated particulate plant material 5 at a velocity which initiates and supports fluidisation of the particulate matter and thus generates a fluidised bed of particulate matter 9. Within this environment, bubbles form and collapse within the fluidised bed of particular matter 9 which in turn, promotes particle movement so that the hot air-particulate matter mixture exhibits fluid-like properties. A by-product of this process is moist air which exits the holding vessel 2 by way of stack 10.

A particular advantage conferred by a fluidised bed is the ability to promote high levels of contact between gasses and particulate material, thus resulting in high thermal transfer utilising convective heat transfer and thus enables thermal uniformity which may be analogous to a well mixed gas.

As will be appreciated by the skilled addressee, the moisture content of the particulate plant material before and after heat treatment is a further consideration in the processes of the present invention. According to general embodiments, the starting moisture content of the particulate plant material is preferably between about 7% and about 20%, more preferably between about 9% and about 17% and even more preferably about 16%, 15%, 14%, 13%, 12%, 11% or 10%. Yet even more preferably, the moisture content of the starting material is about 13%.

The moisture content of the particulate plant material which results from treatment at an elevated temperature according to the processes as hereinbefore described is preferably less than about 5%, and more preferably less than about 4% and yet even more preferably less than 3%.

The step of subjecting the particulate plant material to an elevated temperature can be performed either in batch or in a continuous system. Advantageously, this step is performed in a batch system.

In light of the foregoing, it will be appreciated that according to preferred embodiments, the particulte plant material may be ground or re-ground to a desired particle size in order to achieve a particle distribution which is amenable to the processes of the present invention or to downstream uses of the dried particulate plant material. The processes of the present invention may further include sifting or sieving the particulate plant material and in particular the ground particulate plant material, through a screen with a defined size to produce a flour and/or semolina with a constant average particle size as hereinbefore described.

It will be appreciated that a combination of grinding and sieving steps may also be utilised to achieve the desired overall particle size whilst minimising the amount of out of specification product and therefore minimising the amount of reduce yield and waste. In light of the foregoing, it will also be appreciated that grinding, sieving and/or sifting steps can be performed on a conventional flour mill apparatus.

In those embodiments where the heat treated or dried particulate plant material has a mean particle size which is not appropriate for inclusion into a desired food product or other food product, the heat treated particulate plant material may be either ground or re-ground to produce a flour with a mean particle size that is suited for inclusion into a food product which needs to be smooth textured. According to these particular embodiments, the processes of the present invention further include grinding or re-grinding the dried particulate plant material to a flour with a mean particle size of less than about 100µm. More preferably, the dried particulate plant material is ground or re-ground to a flour with a mean particle size of between about 30µm and about 80µm. Even more preferably, the dried particulate plant material is ground or re-ground to a flour with a mean particle size of about 50µm.

In particularly preferred embodiments, the particulate plant material is dehulled. It will be appreciated that in those embodiments which contemplate dehulled particulate plant material, the dehulling of the particulate plant material may not be complete and therefore a small amount of hulls may be left on the particulate plant material and may be removed during later stages of the process.

The de-hulling of the particulate plant material can be carried out utilising a decortication machine or an alternative abrasive process such as a rice pearler, similar to that used for de-hulling and polishing rice. The de-hulling process can be either a continuous or batch process.

In general embodiments, the particulate plant material may be conditioned by exposing the particulate plant material to moisture, preferably for a period of between 12 and 24 hours. It will be appreciated that conditioning may assist the process of the invention by raising the moisture of the particulate plant material to a level required for elevated temperature treatment and loosening the hulls of the particulate plant material in order to make de-hulling easier and reduce losses of the particulate plant material.

Subjecting the particulate plant material suspended in a fluid stream to an elevated temperature is a means by which a desired flavour and/or characteristic is imparted to a particulate plant material. By way of example, in particular embodiments a nut-like flavour may be imparted to a non-nut particulate plant material for use in a nut-flavoured, nut-free spreadable food product. In other embodiments, a roasted flavour is imparted to a particulate plant material. In yet further embodiments, the flavour of the raw particulate plant material is neutralised. Furthermore, a variety of parameters of the temperature treatment can be varied depending upon the colour and flavour requirement. In particular preferred embodiments, the elevated temperature can be achieved by roasting.

Preferably, the elevated temperature is between about 100°C and about 400°C.

More preferably, the elevated temperature is about 120°C, 130°C, 140°C, 150°C, 160°C, 170°C, 180°C, 190°C,200°C,210°C,220°C, 230°C,240°C,250°C, 260°C, 270°C, 280°C, 290°C, 300°C, 310°C, 320°C, 330°C, 340°C, 350°C, 360°C 370°C, 380°C or about 390°C.

The duration which the particulate plant material is subjected to an elevated temperature is a further factor for developing the required characteristics and/or flavour of the dried particulate plant material. In preferred embodiments, the time of treatment is between about 3 minutes and about 25 minutes and more preferably about 4 minutes, 5 minutes, 6 minutes, 7 minutes, 8 minutes, 9 minutes, 10 minutes, 11 minutes, 12 minutes, 13 minutes, 14 minutes, 15 minutes, 16 minutes, 17 minutes, 18 minutes, 19 minutes, 20 minutes, 21 minutes, 22 minutes, 23 minutes and about 24 minutes.

Even more preferably, the time of treatment is about 4.5 minutes.

Typically, although not exclusively, the particulate plant material is a seed and as such, is composed of an embryo and a coat. In an alternative preferred embodiment of the invention, the coat is removed from the plant material, and in particular the mungbean, prior to the treatment at an elevated temperature. According to this embodiment, the coat comprises no greater than 5% w/w of the final content but preferably less than 1% w/w of a food product and preferably, a spreadable food product.

In a preferred embodiment, the particulate plant material and more particularly, a seed is germinated prior to processing, although a person of skill in the art will appreciate that many particulate plant materials and in particular legumes, may undergo germination. Inclusion of a germination step may increase the nutritional value of some food products. Germination is a complex process that results in a number of significant biochemical changes in the seed. Generally, the conditions that support germination are adequate moisture, warm temperatures, and usually little or no light. Most seeds germinate best in the dark, although some require light. Germination can be induced by exposure of the particulate plant material to moisture under controlled conditions. Preferably, germination is performed under light-deprived conditions at room temperature.

The duration of germination can vary. Preferably, germination is performed for between 12 to 48 hours. More preferably, germination is allowed to proceed for 24 hours.

It can be readily appreciated that dried particulate plant material produced according to the processes of the present invention can form the foundation of a tasty and nutritional food product. Moreover, the processes as described herein for the present invention can be applied to a particulate plant material as suited for a particulate requirement. For example, if a soybean-free food product is required, a non-soybean particulate plant material may be used as the starting material. Non-limiting examples of food products include baked products (including cakes, biscuits, cake and biscuit mixtures, bread, pastry), liquid food products such as beverages, a semi-liquid food product such as a sauce, a flour, a breakfast cereals, a component of a sausage, a nutritional supplement, a nutrion or energy bar, snack bars and spreadable food products such as dips and other spreads. It is contemplated that the composition of the food product of the present invention can be adapted to suit various taste requirements. For example in one embodiment, a spreadable food product contemplated may be a nut-free peanut butter substitute. In another embodiment, the spreadable food product may be a chocolate-flavoured nut-free spreadable food product.

So that the invention may be readily understood and put into practical effect, the following non-limiting Examples are provided

### EXAMPLES

The inventors have tested the following conditions in a fluidised bed dryer Dehulled mung beans with the following composition were used:

| | |
|---|---|
| Protein content | 25% |
| Carbohydrate | 57% |
| Fat | 1.1% |
| Crude fibre | 0.6% |
| Ash | 3.5% |

Starting moisture of mungbean for processing adjusted to 9, 13 and 17%.
Particle size of mungbean: <85 micron <150 micron and 250 to 450 microns.
Temperature of air delivered to the fluidised bed measured at the point of entry: 160°C, 190°C, 210°C, 220°C, 230°C, 240°C, 250°C, 260°C and 270°C.
Time of treatment tested was 3.5 min to 20min
Air velocity: 2.1 to 5 m/sec.

The following conditions were found to be most effective at producing a desirable end product:
Moisture 13%
Particle size 250 to 450 microns
temperature 270°C
air velocity 3 m/s
Time 4.5 min
Finished moisture of mungbean flour is <3%

Note the material is reground after heat treatment for use as an ingredient in the case of the spread, it is ground to 50 microns.

Throughout the specification the aim has been to describe the preferred embodiments of the invention without limiting the invention to any one embodiment or specific collection of features.

## Claims

1. A process of drying a particulate plant material for use in a food product, said process including the step of subjecting a particulate plant material suspended in a fluidised bed to an elevated temperature of at least 100°C for at least 3 minutes to develop desired flavour characteristics to the particulate plant material and to thereby dry said particulate plant material, wherein said particulate plant material is ground or milled.

2. The process of drying a particulate plant material according to Claim 1, wherein the particulate plant material has a mean particle size of less than about 1000µm.

3. The process of drying a particulate plant material according to any one of the preceding claims, wherein the particulate plant material is a non-nut plant material.

4. The process of drying a particulate plant material according to any one of the preceding claims, wherein the particulate plant material is selected from the group consisting of a plant seed, a cereal grain and a legume.

5. The process of drying a particulate plant material according to any one of the preceding claims, where the particulate plant material is a legume, and the legume is not a peanut or any other nut.

6. The process of drying a particulate plant material according to Claim 5, wherein the legume is selected from the group consisting of a bean, a mesquite, a broad bean, a pea, a lupin and a lentil.

7. The process of drying a particulate plant material according to Claim 6, wherein the bean is selected from the group consisting of a mungbean, a soybean, an adzuki bean, an anasazi, a lima bean, a cow pea, a rice bean, a urad bean, a moth bean, a tepary bean, a runner bean, a hyacinth bean, a black bean, a fava bean, a faba bean, a kidney bean.

8. The process of drying a particulate plant material according to Claim 4, wherein the plant seed is selected from the group consisting of a sunflower seed, an amaranth seed, a quinoa seed, a tef seed, a chiatah seed, a buckwheat seed and a pumpkin seed.

9. The process of drying a particulate plant material according to Claim 4, wherein the cereal grain is selected from the group consisting of wheat, barley, rice, maize, sorghum, rye, millet and oats.

10. The process of drying a particulate plant material according to any one of the preceding claims, wherein the elevated temperature is between about 100°C and about 400°C.

11. The process of drying a particulate plant material according to any one of the preceding claims, wherein the dried particulate plant material imparts a roasted-flavour or a nut-flavour to said food product.

12. The process of drying a particulate plant material according to claim 1, wherein the particulate plant material is a non-nut leguminous plant material.

13. The process of drying a particulate plant material according to claim 12, wherein the non-nut leguminous plant material is a not a peanut.

14. The process of drying a particulate plant material according to claim 1 for use in a method of producing a food product.

## Patentansprüche

1. Verfahren zum Trocknen eines teilchenförmigen pflanzlichen Materials zur Verwendung in einem Nahrungsmittelprodukt, wobei das Verfahren den Schritt des Aussetzens eines in einer Wirbelschicht suspendierten teilchenförmigen pflanzlichen Materials gegenüber einer erhöhten Temperatur von zumindest 100 °C für zumindest 3 min umfasst, um gewünschte Geschmackseigenschaften des teilchenförmigen pflanzlichen Materials zu entwickeln und das teilchenförmige pflanzliche Material dabei zu trocknen, wobei das teilchenförmige pflanzliche Material gerieben oder gemahlen ist.

2. Verfahren zum Trocknen eines teilchenförmigen pflanzlichen Materials nach Anspruch 1, worin das teilchenförmige pflanzliche Material eine mittlere Teilchengröße von weniger als etwa 1.000 µm aufweist.

3. Verfahren zum Trocknen eines teilchenförmigen pflanzlichen Materials nach einem der vorangegangenen Ansprüche, worin das teilchenförmige pflanzliche Material ein pflanzliches Material ist, das keine Nuss ist.

4. Verfahren zum Trocknen eines teilchenförmigen pflanzlichen Materials nach einem der vorangegangenen Ansprüche, worin das teilchenförmige pflanzliche Material aus der aus Pflanzensamen, Getreidekörnern und Hülsenfrüchten bestehenden Gruppe ausgewählt ist.

5. Verfahren zum Trocknen eines teilchenförmigen pflanzlichen Materials nach einem der vorangegangenen Ansprüche, worin das teilchenförmige pflanzliche Material eine Hülsenfrucht ist und es sich bei der Hülsenfrucht nicht um eine Erdnuss oder eine andere Nuss handelt.

6. Verfahren zum Trocknen eines teilchenförmigen pflanzlichen Materials nach Anspruch 5, worin die Hülsenfrucht aus der aus Bohnen, Mesquitebohnen, Ackerbohnen, Erbsen, Lupinen und Linsen bestehenden Gruppe ausgewählt ist.

7. Verfahren zum Trocknen eines teilchenförmigen pflanzlichen Materials nach Anspruch 6, worin die Bohnen aus der aus folgenden bestehenden Gruppe ausgewählt sind: Mungobohnen, Sojabohnen, Adzukibohnen, Anasazibohnen, Limabohnen, Augenbohnen, Reisbohnen, Urdbohnen, Mattenbohnen, Teparybohnen, Feuerbohnen, Helbohnen, Schwarze Bohnen, Favabohnen, Puffbohnen und Kidneybohnen.

8. Verfahren zum Trocknen eines teilchenförmigen pflanzlichen Materials nach Anspruch 4, worin die Pflanzensamen aus der aus folgenden bestehenden Gruppe ausgewählt sind: Sonnenblumenkernen, Amaranthsamen, Quinoasamen, Teffsamen, Chiasamen, Buchweizensamen und Kürbiskernen.

9. Verfahren zum Trocknen eines teilchenförmigen pflanzlichen Materials nach Anspruch 4, worin die Getreidekörner aus der aus folgenden bestehenden Gruppe ausgewählt sind: Weizen, Gerste, Reiz, Mais, Sorghum, Roggen, Hirse und Hafer.

10. Verfahren zum Trocknen eines teilchenförmigen pflanzlichen Materials nach einem der vorangegangenen Ansprüche, worin die erhöhte Temperatur zwischen etwa 100 °C und etwa 400 °C liegt.

11. Verfahren zum Trocknen eines teilchenförmigen pflanzlichen Materials nach einem der vorangegangenen Ansprüche, worin das getrocknete teilchenförmige pflanzliche Material dem Nahrungsmittelprodukt einen gerösteten oder nussigen Geschmack verleiht.

12. Verfahren zum Trocknen eines teilchenförmigen pflanzlichen Materials nach Anspruch 1, worin das teilchenförmige pflanzliche Material eine Hülsenfrucht ist, die keine Nuss ist.

13. Verfahren zum Trocknen eines teilchenförmigen pflanzlichen Materials nach Anspruch 12, worin das pflanzliche Hülsenfruchtmaterial keine Erdnuss ist.

14. Verfahren zum Trocknen eines teilchenförmigen pflanzlichen Materials nach Anspruch 1 zur Anwendung in einem Verfahren zur Herstellung eines Nahrungsmittelsprodukts.

## Revendications

1. Procédé de séchage d'un matériau de plante particulaire pour utilisation dans un produit alimentaire, ledit procédé comprenant l'étape consistant à soumettre un matériau de plante particulaire suspendu dans un lit fluidisé à une température élevée d'au moins 100°C pendant au moins 3 minutes pour développer les caractéristiques de saveur recherchées dans le matériau de plante particulaire et pour sécher ainsi ledit matériau de plante particulaire, où ledit matériau de plante particulaire est broyé ou moulu.

2. Procédé de séchage d'un matériau de plante particulaire selon la revendication 1, où le matériau de plante particulaire a une dimension de particule moyenne inférieure à environ 1000µm.

3. Procédé de séchage d'un matériau de plante particulaire selon l'une quelconque des revendications précédentes, où le matériau de plante particulaire est un matériau de plante non-noix.

4. Procédé de séchage d'un matériau de plante particulaire selon l'une quelconque des revendications précédentes, où le matériau de plante particulaire est sélectionné dans le groupe consistant en semence de plante, un grain céréalier et un légume.

5. Procédé de séchage d'un matériau de plante particulaire selon l'une quelconque des revendications précédentes, où le matériau de plante particulaire est un légume, et le légume n'est pas un arachide ou autre noix.

6. Procédé de séchage d'un matériau de plante particulaire selon la revendication 5, où le légume est sélectionné dans le groupe consistant en un haricot, un mesquite, une fève, un pois, un lupin et une lentille.

7. Procédé de séchage d'un matériau de plante particulaire selon la revendication 6, où la fève est sélectionnée dans le groupe consistant en un haricot mungo, un soja, le haricot adzuki, un anasazi, un haricot de Lima, un niébé, un haricot riz, un haricot urad, un haricot papillon, un haricot tépary, un haricot d'Espagne, un haricot de jacinthe, un haricot noir, une fève, une févérole et une fève rognon.

8. Procédé de séchage d'un matériau de plante particulaire selon la revendication 4, où la semence de plantes est sélectionnée dans le groupe consistant en semences de tournesol, une semence d'amarante, une semence de quinoa, une semence de tef, une semence de cheetahs, une semence de blé noir et une semence de courge.

9. Procédé de séchage d'un matériau de plante particulaire selon la revendication 4, où le grain céréalier est sélectionné dans le groupe consistant en blé, orge, riz, maïs, sorgho, seigle, millet et avoine.

10. Procédé de séchage d'un matériau de plante particulaire selon l'une quelconque des revendications précédentes, où la température élevée est entre environ 100°C et environ 400°C.

11. Procédé de séchage d'un matériau de plante particulaire selon l'une quelconque des revendications précédentes, où le matériau de plante particulaire séché donne une saveur grillée ou une saveur de noix audit produit alimentaire.

12. Procédé de séchage d'un matériau de plante particulaire selon la revendication 1, où le matériau de plante particulaire est un matériau de plante légumineux non-noix.

13. Procédé de séchage d'un matériau de plante particulaire selon la revendication 12, où le matériau de plante légumineux non-noix n'est pas une cacahouète.

14. Procédé de séchage d'un matériau de plante particulaire selon la revendication 1, pour utilisation dans une méthode de production d'un produit alimentaire.
